(19) Europäisches Patentamt
European Patent Office
Office européen des brevets

(11) **EP 0 803 163 B1**

(12) **EUROPEAN PATENT SPECIFICATION**

(45) Date of publication and mention
of the grant of the patent:
**08.07.2009 Bulletin 2009/28**

(51) Int Cl.:
*H04J 3/16* *(2006.01)*     *H04J 3/22* *(2006.01)*
*H04N 7/12* *(2006.01)*     *H04N 7/58* *(2006.01)*

(21) Application number: **94916545.0**

(22) Date of filing: **20.04.1994**

(86) International application number:
**PCT/US1994/004333**

(87) International publication number:
**WO 1995/029559 (02.11.1995 Gazette 1995/47)**

(54) **A MULTIPLEXER SYSTEM USING CONSTANT BIT RATE ENCODERS**

MULTIPLEXSYSTEM MIT KONSTANTBITRATENKODIERER

SYSTEME MULTIPLEXEUR METTANT EN  UVRE DES CODEURS A DEBIT BINAIRE CONSTANT

(84) Designated Contracting States:
**DE FR GB**

(43) Date of publication of application:
**29.10.1997 Bulletin 1997/44**

(73) Proprietor: **Thomson Inc.**
**Indianapolis, IN 46290-1024 (US)**

(72) Inventors:
• **OZKAN, Mehmet Kemal,**
**Apartment 7**
**Carmel, IN 46032 (US)**
• **BEYERS, Billy, Wesley**
**Greenfield, IN 46140 (US)**
• **REININGER, Daniel, Jorge**
**Plainsboro, NJ 08536 (US)**
• **JOSEPH, Kuriacose**
**Plainsboro, NJ 08536 (US)**

(74) Representative: **Ruellan-Lemonnier, Brigitte**
**Thomson multimedia**
**Patent Department**
**46 Quai A. Le Gallo**
**92648 Boulogne Cedex (FR)**

(56) References cited:
| | |
|---|---|
| EP-A- 0 643 537 | US-A- 4 713 776 |
| US-A- 4 864 562 | US-A- 5 115 309 |
| US-A- 5 115 309 | US-A- 5 134 476 |
| US-A- 5 202 886 | US-A- 5 231 484 |
| US-A- 5 231 492 | US-A- 5 534 926 |

• **PROCEEDINGS OF THE SPIE - THE INTERNATIONAL SOCIETY FOR OPTICAL ENGINEERING, vol. 2188, 8 - 10 February 1994, USA, pages 153-162, XP002057147 REININGER D ET AL: "RATE CONTROL FOR VBR MPEG VIDEO ON LOCAL AREA NETWORKS"**

## Description

The present application relates to a multiplexer system for dynamically allocating bits in a multiplexed stream of data to respective constant bit rate encoded data channels.

BACKGROUND OF THE INVENTION

It is sometimes necessary in data transmission systems to transmit data from a plurality of data sources, or channels, from one location to another. In such situations, data from the channels is often combined, or multiplexed, at a head end station into a single data stream. The multiplexed data stream is then transmitted over a transmission link, such as a wire, fiber optic or radio link, to a back end station, where the channels of data from the multiplexed data stream are then separated, or demultiplexed, and supplied to the intended recipients.

For example, a plurality of video signals from respective sources, which may be television network feeds, television stations, or other video sources, may be transmitted over a satellite link for broadcast to respective television receivers in consumers' homes. An exemplary satellite link includes a digital transmission path capable of transmitting 24 megabits per second (Mbps). In order to maximize efficiency and utilization of such a link, it is necessary for several video signals to share the link. For example, it may be desired to share the above satellite transmission link among at least six video signal channels.

One known method for performing the transmission of such channels is to use variable bit rate (VBR) encoders to encode the respective video signals from the channels, and then multiplex the resulting encoded video signals. A VBR encoder produces successive frames of digitally encoded video which have different numbers of bits, depending upon the spatial and temporal complexity of the image represented by the video signal. More spatially complex scenes and/or scenes with motion require more bits to encode them than spatially simple scenes with little motion.

It is assumed that, statistically, the average combined bit rate from all the VBR encoders will be less than the maximum bit rate of the transmission link, even though at any given time a single channel encoder may provide a large number of bits in a burst for transmission. For this reason, such apparatus is termed a statistical multiplexer. However, there is a finite probability that the instantaneous combined bit rate from all the channels will exceed the maximum bit rate of the transmission link, resulting in loss of data at the back end station. In some embodiments, buffers are added for either the respective channels or the multiplexed data stream. However, there still exists a finite probability that those buffers will overflow, again resulting in loss of data at the back end station.

Another known method for performing the multiplexing function, which attempts to solve some of the problems of the VBR encoders, is to use constant bit rate (CBR) encoders for each channel. In such a system, the video signal from each channel is supplied to a CBR encoder. A CBR encoder produces a digitally encoded bit stream, representing the video signal supplied to it, at a predetermined constant bit rate. To produce a constant bit rate signal, a CBR encoder continually modifies the number of quantizing levels into which the video signal is encoded. Using fewer quantizing levels requires fewer bits to represent those levels, and the overall number of bits required to represent the video signal is reduced. Conversely, using more quantizing levels requires more bits to represent those levels, and the overall number of bits required to represent the image is increased.

The appropriate number of quantizing levels depends upon the complexity of the frame currently being encoded. A CBR encoder encodes an image having lower spatial and temporal complexity with an increased number of quantizing levels to produce the predetermined bit rate. Conversely, to encode an image having higher spatial and/or temporal complexity in the allocated number of bits, the number of quantizing levels is reduced.

However, varying the quantization levels in an encoded signal representing an image effects a corresponding change in the quality of the image reproduced from the encoded signal. Using fewer quantization levels results in a lower quality reproduced image than using more quantization levels. Thus, in a CBR encoder, video signals representing spatially and/or temporally more complex images are encoded in such a manner that the quality of the reproduced image is lower than that of less complex images.

Because CBR encoders produce a constant bit rate, however, controlling the multiplexing of video signals from a plurality of such encoders is simplified. Each encoder is *a priori* allocated a bit rate representing its quota of the total available bit rate of the transmission link. One known allocation method allocates equal portions of the total bit rate of the transmission link to each encoder. However, video signals representing different program types inherently have differing complexities. For example, a video channel transmitting a basketball game has a much higher complexity than one transmitting a panel discussion. Thus, the quality of the image reproduced from the encoded video signal representing the basketball game will be lower (probably substantially lower) than that of the panel discussion.

Another known allocation method, which attempts to solve this problem, allocates different bit rates to each CBR encoder based on the expected image complexity of the signal to be encoded. Thus, the channel transmitting a basketball game would be allocated a larger proportion of the total bit rate of the transmission link than the channel transmitting the panel discussion. Such an allocation method can result in the quality of the images reproduced from the encoded signals representing both the basketball game and the panel discussion being more nearly equal.

Yet another known allocation method allocates the proportion of the total bit rate of the transmission link to channels based on payment by the provider of the signal. The more the provider pays for the transmission of the channel, the greater the proportion of the total bit rate of the transmission link allocated to that channel, and the better the quality of the image reproduced from the encoded signal through that channel.

Patent US-A-5115309 discloses a method and system for allocating bit rates for a group of parallel encoders, in accordance with the complexity of the data being processed by such encoders. The complexity of data, from an image, is determined by calculating the average quantization step size (for the parallel encoders) and the average number of bits per pixel employed by each video encoder for the image contained in the previous frame. This technique is however unable to accurately accommodate more than one frame of video data at a time.

The article from Proceedings of the SPIE - The International Society for Optical Engineering, vol. 2188, 8-10 February 1994, USA, pages 153-163, 'Rate Control for VBR MPEG Video on Local Area Networks' is related to multiplexed dual rate-control-mode MPEG-2 encoders, which operate in either a variable bit rate (VBR) or joint rate controlled VBR mode (RC-VBR). During congestion, the RC-VBR mode is employed to regulate the encoders' bit-rates to achieve uniform quality and bring the buffer to a normal occupancy level. Bit rate allocation is carried out for each multiplexing epoch (one-sixth of a frame period) according to a signal representative of the complexity of each source.

BRIEF SUMMARY OF THE INVENTION

The inventors have realized, that the complexity of a video signal cannot always be specified *a priori*. For example, a news broadcast contains scenes of very low complexity, (e.g. a news reader sitting behind a desk reading news) interspersed with scenes of very high complexity (e.g. a video clip of a basketball game). If such a video channel were *a priori* allocated a high proportion of the total bit rate of the transmission link, then the basketball game scene would be reproduced with acceptable quality, but the news reader scene would be encoded with too high a quality, or, in other words, with more bits than is necessary. On the other hand, if such a video channel were allocated a lower proportion of the total bit rate of the transmission link, then the news reader scene would be reproduced with acceptable quality using a reasonable number of bits, but the allocated bit rate would be insufficient to reproduce the basketball game scene with acceptable quality.

The inventors further realized that each video source, on the average, may be characterized in the same manner as the above news broadcast. I.e. almost every video signal of commercial interest contains scenes of high complexity interspersed with scenes of low complexity. They also realized that the scenes of differing complexity are uncorrelated in time. Furthermore, they have found that, within any given frame period, the images of the different channels have differing complexities, and that these complexity variations are also uncorrelated in time.

It was found desirable that bit rates be dynamically allocated to different channels based on the current image complexity of those channels. The complexity of the images currently being transmitted for all the channels are evaluated, and a proportion of the total bit rate of the transmission link is allocated to each channel corresponding in some manner to the relationship of the complexity of the current image of that channel to the overall complexity of the images of all the channels.

In accordance with principles of the present invention, a multiplexer system according to claim 1 is defined.

A multiplexer system operated in this manner allocates bits to the various channels such that, during any time period, the quality of the reproduced images of all the channels have about the same quality. It further optimizes the overall reproduced image quality. A channel transmitting a high complexity image for a period of time will dynamically be allocated a higher bit rate during that period of time, but when the complexity of the image becomes lower, the bit rate allocated to that channel will be reduced, and assigned to other channels which are transmitting higher complexity images.

BRIEF DESCRIPTION OF THE DRAWING

Fig. 1 is a block diagram of a multiplexer system according to the present invention;
Fig. 2 is a block diagram of a channel processor which may be used in the multiplexer system illustrated in Fig. 1;
Fig. 3 is a block diagram of a portion of an MPEG encoder which may be used in the channel processor illustrated in Fig. 2;
Fig. 4 is a block diagram of a bit rate allocator which may be used in the multiplexer system illustrated in Fig. 1;
Fig. 5 is a more detailed block diagram of a complexity analyzer which may be used in the channel processor illustrated in Fig. 2; and
Figs 6, 7 and 8 are timing diagrams illustrating the sampling of complexity information.

**EP 0 803 163 B1**

<u>DETAINED DESCRIPTION OF A REFERRED EMBODIMENT</u>

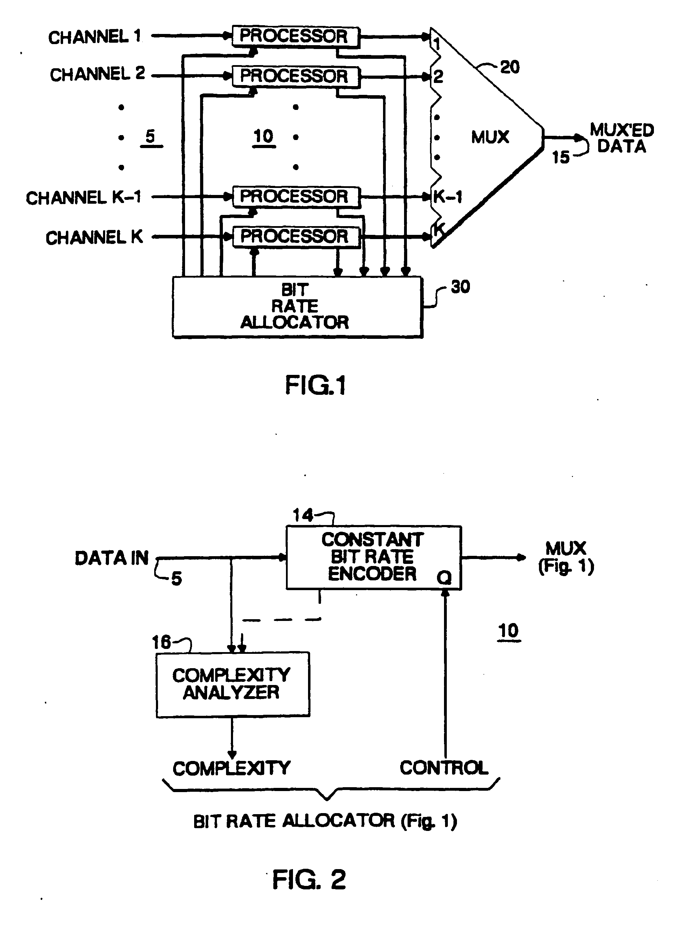

Fig. 1 is a block diagram of a multiplexer system incorporating the present invention. In Fig. 1, all signal paths are illustrated as single signal lines. However, one skilled in the art will understand that the illustrated signal paths could carry multibit digital signals, either in parallel, in which case the signal paths would be composed of multiple signal lines, or serially, in which case the signal paths could be a single data line and/or include a data and clock signal line. Other control and clock signal paths, not germane to the understanding of the present invention have been omitted from the figure to simplify it.

In Fig. 1 a plurality of input terminals 5 are coupled to sources (not shown) of video signals (CHANNEL 1 - CHANNEL K) which are to be transmitted together over a data link. The plurality of input terminals 5 are coupled to respective data input terminals of a corresponding plurality of channel processors 10. Respective data output terminals of the plurality of channel processors 10 are coupled to corresponding data input terminals 1 - K of a multiplexer (MUX) 20. A data output terminal of multiplexer 20 is coupled to an output terminal 15 of the multiplexer system. Output terminal 15 is coupled to utilization circuitry (not shown) for transmitting the multiplexed data stream (MUX'ED DATA) over the transmission link.

Each of the plurality of channel processors 10 further includes a complexity output terminal and a control input terminal. The respective complexity output terminals of each of the plurality of channel processors are coupled to corresponding complexity input terminals of a bit rate allocator 30, and respective quota output terminals of the bit rate allocator 30 are coupled to the corresponding control input terminals of the plurality of channel processors 10.

In operation, each channel processor receives a signal at its control input terminal representing the bit rate allocated to it for the next quota period. The channel processor then encodes the signal at its data input terminal for the next quota period into a digitally encoded signal at the allocated bit rate. The encoded data signal is supplied to the corresponding input terminal of multiplexer 20. Multiplexer 20 operates in a known manner to combine the signals from all the channel processors into a multiplexed data stream. The multiplexed data stream is then supplied to the circuitry comprising the data link for transmission, also in a known manner.

During the encoding process, the channel processor 10 generates a signal at its complexity output terminal representing the coding complexity of the signal being encoded. The bit rate allocator 30 receives the signals from the complexity output terminals of the channel processors 10, and, based on all of the complexity signals, dynamically adjusts the bit rate quotas for the next quota period among the plurality of channel processors 10. In a preferred embodiment, more complex signals are dynamically allocated a relatively higher bit rate than less complex signals. Different methods of determining the complexity of the video signal and for allocating bit rates based on the complexities are described below.

Fig. 2 is a block diagram of a channel processor which may be used in the multiplexer system illustrated in Fig. 1. In Fig. 2, elements similar to those in Fig. 1 are designated by the same reference number, and are not described in detail below. In Fig. 2, a data input terminal 5 is coupled a video signal source (not shown). Data input terminal 5 is coupled to a data input terminal of a constant bit rate encoder (CBR) 14, and a complexity analyzer 16. A data output terminal of the CBR encoder 14 is coupled to an input terminal of multiplexer (MUX) 20 (of Fig. 1). A control input terminal (CONTROL) of the channel processor 10 is coupled to a quota input terminal Q of the CBR encoder 10. An output terminal of the complexity analyzer 16 is coupled to the complexity output terminal (COMPLEXITY) of the channel processor 10.

In operation, the complexity analyzer 16 analyzes the complexity of the video signal at the data input terminal 5. A signal is produced at the output terminal of the complexity analyzer 16 representative of the complexity of the input signal. The complexity representative signal is supplied to the bit rate allocator 30 (of Fig. 1). In response to this complexity signal (and those of the other channel processors 10), bit rate allocator 30 provides a signal to the control input terminal (CONTROL) of this channel processor 10 (and the other channel processors 10) representing the bit rate allocated to this channel processor 10. The CBR encoder 14 provides a data path between its data input and data output terminals for producing an output signal encoded at a constant bit rate. The constant bit rate is set in response to the signal at the quota input terminal Q from the control input terminal (CONTROL) of the channel processor 10 from the bit rate allocator 30.

It is possible that circuitry in the CBR encoder 14 can also be utilized by the complexity analyzer 16 in performing its analysis. In such a case, data is supplied from within the CBR encoder 14 directly to the complexity analyzer 16, as illustrated in phantom in Fig. 2. Such data from the CBR encoder 14 may supplement data from the input terminal 5, or replace it altogether, in which case there is no direct connection of the complexity analyzer to The data input terminal 5.

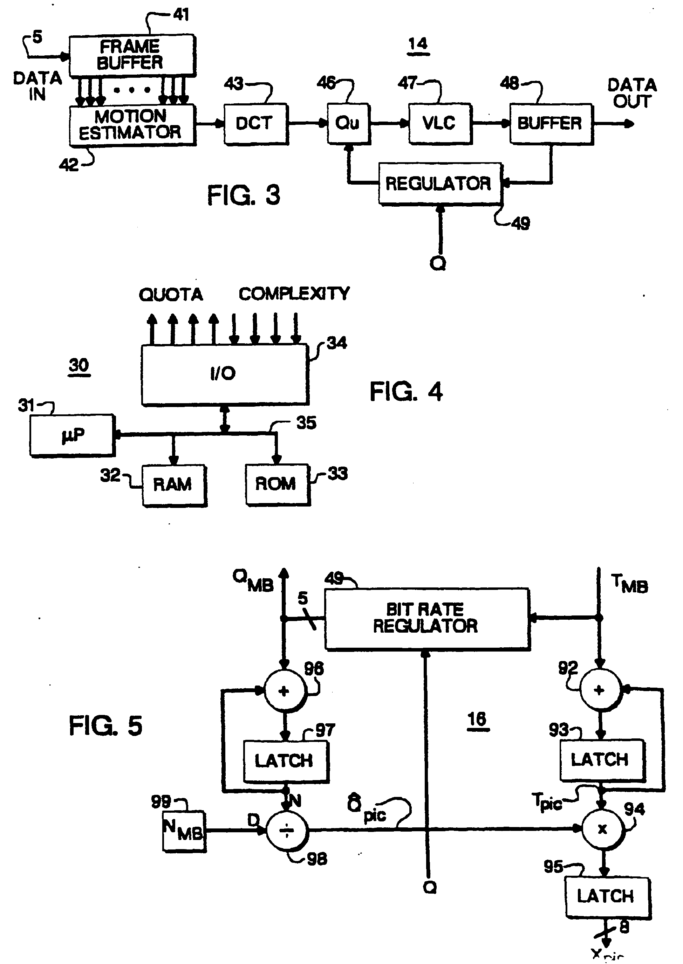

In a preferred embodiment, each CBR encoder 14 is an encoder which compresses and encodes a video signal in accordance with a standard promulgated by the Moving Picture Expert Group (MPEG), termed an MPEG encoder. Fig. 3 is a block diagram illustrating a portion of an MPEG encoder 14. The known components of the MPEG encoder 14 will not be described in detail below. MPEG encoders include other elements, not germane to an understanding of the present invention, which have been omitted from the figure to simplify it.

In Fig. 3, a data input terminal 5 (DATA IN) of MPEG encoder 14 is coupled to a source (not shown) of a video signal to be compressed and encoded. Input terminal 5 is coupled to an input terminal of a frame buffer 41. Frame buffer 41 includes a plurality of frame period buffers or delay lines and a plurality of output terminals producing respective signals representing portions of different, but temporally adjacent, frames or pictures. The plurality of output terminals of the frame buffer 41 are coupled to corresponding input terminals of a motion estimator 42. An output terminal of the motion estimator is coupled to a discrete cosine transform (DCT) circuit 43. An output terminal of DCT circuit 43 is coupled to a data input terminal of a variable quantizer (Qu) circuit 46. An output terminal of variable quantizer circuit 46 is coupled to an input terminal of a variable length coder (VLC) 47. An output terminal of VLC 47 is coupled to an input terminal of an output buffer 48. A data output terminal of output buffer 48 is coupled to a data output terminal (DATA OUT) of MPEG encoder 14. Data output terminal (DATA OUT) of MPEG encoder 14 is coupled to a corresponding input terminal of multiplexer 20 (of Fig. 1).

A status output terminal of output buffer 48 is coupled to a status input terminal of a bit rate regulator 49. A control output terminal of bit rate regulator 49 is coupled to a control input terminal of variable quantizer 46. A quota input terminal Q of MPEG encoder 14 is coupled to a corresponding quota output terminal of bit rate allocator 30. The quota input terminal Q of the MPEG encoder 14 is coupled to a control input terminal of regulator 49.

In operation, MPEG encoder 14 operates in a known manner to compress and encode the video signal at its input terminal for the next quota period at a bit rate determined by the signal at its Q input terminal. In the following example, an MPEG encoder encoding a video signal partitioned into groups (GOPs) consisting of twelve pictures or frames is described. However, it should be understood that the number of pictures or frames in a GOP can vary. Also in the following example, it is assumed that the bit rate allocation for each MPEG encoder is updated once each GOP, i.e. the quota period is the GOP period. However, it should also be understood that the quota period may be different, and may even vary over time.

The frame buffer 41 receives and stores data representing the portion of the twelve frames in the exemplary GOP currently being encoded necessary to perform motion estimation, in a manner described below. This data is supplied to motion estimator 42. In the preferred embodiment, the first one of the twelve frames or pictures is used as a reference frame (I frame), and is passed through the motion estimator to DCT circuit 43. For the remainder of the frames, a motion vector is generated in motion estimator 42 for each one of a plurality of 16 pixel by 16 line blocks in each picture or frame, termed macroblocks in the MPEG standard document, either from preceding frames alone (P frames), or interpolated from both preceding and succeeding frames (B frames). As described above, frame buffer 41 holds the data necessary for the motion estimator to perform the estimation from preceding frames or the interpolation from preceding and succeeding frames. The generated motion vectors for a particular frame are then compared to the actual data in the frame being estimated and a motion difference signal is generated, and supplied to DCT circuit 43.

In the DCT circuit 43, the 16 pixel by 16 line macroblocks of spatial data from the I frame and motion difference signals from the P frames and B frames are divided into six 8 pixel by 8 line blocks (four luminance blocks, and two subsampled chrominance blocks) termed microblocks in the remainder of this application, in accordance with the MPEG standard document. A discrete cosine transform is performed on each microblock. The resulting 8 by 8 blocks of DCT coefficients are then supplied to variable quantizer 46. The 8 by 8 blocks of coefficients are quantized, scanned in a zig-zag order and supplied to VLC 47. The quantized DCT coefficients, and other side information (related to parameters of the encoded GOP), representing the GOP are encoded using runlength coding in the VLC 47, and supplied to output buffer 48.

It is known that the most direct way to control the output bit rate of VLC 47, and thus maintain the allocated constant bit rate for the MPEG encoder 14, is to control the number of quantizing levels (or, put another way, the quantizing step size) to be used for quantizing each block of DCT coefficients in the variable quantizer 46. The control signal supplied to the variable quantizer 46 from the bit rate regulator 49 performs this controlling function. Within a quota period, which is the period between successive bit rate quota update signals from the bit rate allocator 30 (of Fig. 1), the bit rate regulator 49, in known manner, supplies a control signal to the variable quantizer 46 which varies the number of levels into which each 16 by 16 macroblock in the GOP is being quantized in order to maintain the allocated bit rate for that quota period. The bit rate allocation for the bit rate regulator 49 in the present example is varied for each GOP period in response to the coding complexity values of the video signals in each of the plurality of channels, in a manner described below.

In a preferred embodiment, bit rate allocator 30 (of Fig. 1), is a computer system having connections coupled to various circuit components in the plurality 10 of channel processors. Fig. 4 is a block diagram of the hardware forming the bit rate allocator 30. In Fig. 4, a microprocessor ($\mu$P) 31 is coupled to a read/write memory (RAM) 32, a read-only memory (ROM) 33 and an input/output (I/O) controller 34 over a computer system bus 35. There are other components of the computer system, such as mass storage devices, and user terminals, which have not been illustrated in order to simplify the figure. The I/O controller 34 has a plurality of input terminals (COMPLEXITY) coupled to corresponding complexity output terminals of the plurality 10 of channel processors (of Fig. 1) and a plurality of output terminals (QUOTA) coupled to corresponding quota input terminals of the plurality 10 of channel processors.

The microprocessor 31, RAM 32, ROM 33 and I/O controller 34 operate as a computer system in known manner to execute programs stored in the ROM 33, store and retrieve data in the RAM 32 and receive data from and transmit data to the devices attached to the I/O controller 34. The data representing the current coding complexity of the video signals being encoded in the plurality 10 of channel processors (of Fig. 1) are received from the corresponding output terminals of those channel processors at the I/O controller 34 via the COMPLEXITY input terminals in a manner described below. The microprocessor 31 is notified of the receipt of this data in a known manner, e.g. polling, interrupt, etc. The microprocessor 31 retrieves those signals from the I/O controller 34 via the computer system bus 35, determines the quota of bits for the next quota period for each of the encoders, and supplies signals representing those quotas to the plurality 10 of channel processors via the QUOTA output terminals at the next quota period.

A preferred method for determining the coding complexity of a video signal being encoded by an MPEG encoder 14 (of Fig. 3) utilizes the quantization scale factor (designated $Q_{MB}$) for each 16 by 16 macroblock and the number of bits (designated $T_{MB}$) used to encode that macroblock, for all the macroblocks in each picture or frame of the GOP. Fig. 5 is a block diagram of bit rate regulator 49 of the MPEG encoder 14 (of Fig. 3) and the complexity analyzer 16 (of Fig. 2) which generates a coding complexity representative signal according to this method. Various clock and control signals have been omitted from Fig 5, to simplify it. However, what signals are required, and the necessary timing and voltage characteristics of these signals are well understood.

The complexity analyzer 16 illustrated in Fig. 5 is an example of a complexity analyzer utilizing information from the CBR encoder 14 only, as illustrated in phantom in Fig. 2. In Fig. 5, bit rate regulator 49 has a status input terminal $T_{MB}$ coupled to the status output terminal of output buffer 48 (of Fig. 3). The control output terminal $Q_{MB}$ of bit rate regulator 49 is coupled to the control input terminal of variable quantizer 46 (of Fig. 3). Regulator 49 further has a control input terminal (Q) coupled to a corresponding quota output terminal of the bit rate allocator 30 (of Fig. 1).

The status input terminal $T_{MB}$ of the bit rate regulator 49 is also coupled to a first input terminal of a first adder 92. An output terminal of the first adder 92 is coupled to an input terminal of a first latch 93. An output terminal of the first latch 93 is coupled to a first input terminal of a multiplier 94 and a second input terminal of the first adder 92. An output terminal of the multiplier 94 is coupled to an input terminal of a second latch 95. An output terminal of the second latch 95 is coupled to a coding complexity output terminal $X_{pic}$. Complexity output terminal $X_{pic}$ is coupled a corresponding complexity input terminal of bit rate allocator 30 (of Fig. 1).

The control output terminal $Q_{MB}$ of bit rate regulator 49 is also coupled to a first input terminal of a second adder 96. An output terminal of the second adder 96 is coupled to an input terminal of a third latch 97. An output terminal of the third latch 97 is coupled to a numerator input terminal N of a divider 98 and to a second input terminal of the second adder 96. An output terminal of divider 98 is coupled to a second input terminal of the multiplier 94. A register 99 has an output terminal coupled to the denominator input terminal D of the divider 98.

In operation, for each macroblock, bit rate regulator 49 generates a quantizing scale factor signal $Q_{MB}$ for the variable quantizer 46, in a known manner, based on the current bit rate quota and the number of bits used to encode preceding pictures, and then receives a signal from the output buffer 48 indicating the number of bits $T_{MB}$ used to encode that macroblock. The variable quantizer 46 (of Fig. 3) quantizes the DCT coefficients in each macroblock in accordance with the quantizing scale factor $Q_{MB}$. The quantizing scale factor $Q_{MB}$ represents the quantizing step size, or percentage of the full dynamic range of the DCT coefficients in each quantizing level. A high value for $Q_{MB}$ means that there is a larger quantizing step size, and, consequently, fewer quantizing levels. Conversely, a low value for $Q_{MB}$ means that there is a smaller quantizing step size, and, consequently, more quantizing levels. In the preferred embodiment, $Q_{MB}$ is a five bit integer (having values between 1 and 31).

An average quantizing scale factor for all the macroblocks in a complete picture or frame (designated $Q_{pic}$) is then calculated as follows. At the beginning of each frame or picture, latches 93 and 97 are cleared to zero in response to a clear signal (not shown). The combination of the second adder 96 and the third latch 97 operate as an accumulator to continually sum the macroblock quantizing scale factors $Q_{MB}$ from the bit rate regulator 49. At the same time, the combination of the first adder 92 and the first latch 93 operate as an accumulator to continually sum the number of bits used thus far to encode the frame or picture.

After all of the macroblocks in a frame or picture (a number designated $N_{MB}$) have been processed, latch 97 contains the sum of all of the macroblock quantizing scale factors $Q_{MB}$ produced by bit rate regulator 49, and latch 93 contains the sum of all the bits used to encode the picture or frame $T_{pic}$. The divider 98 produces the quotient of the sum of all the macroblock quantizing scale factors $Q_{MB}$ in the picture or frame, divided by the number of macroblocks in the picture or frame $N_{MB}$. This quotient is the average quantizing scale factor $\overline{Q}_{pic}$ for that frame or picture. The multiplier 94 produces the product of $\overline{Q}_{pic}$ and $T_{pic}$, which is the coding complexity for that picture (designated $X_{pic}$), i.e. $X_{pic} = T_{pic} \cdot \overline{Q}_{pic}$. At the end of the picture or frame, the coding complexity signal $X_{pic}$ is latched into the second latch 95 in response to a clock signal (not shown). The above described cycle then repeats for each frame or picture in the video signal being encoded.

The coding complexity $X_{pic}$ is then supplied from latch 95 to a complexity input terminal of the I/O controller 34 of the bit rate allocator 30 (of Fig. 4) which performs the remaining processing to obtain the coding complexity for the GOP. The coding complexity for a GOP (designated $X_{GOP}$) is the sum of the $X_{pic}$'s for all of the pictures in that GOP. (See equation (1)).

$$X_{GOP} = \sum_{\text{all pics in GOP}} T_{pic} \cdot Q_{pic} = \sum_{\text{all pics in GOP}} X_{pic} \quad (1)$$

The $\mu$P 31 acts as an accumulator by retrieving each $X_{pic}$ value from the I/O controller 34, and summing them over all of the frames or pictures in the GOP.

The number of frames or pictures in a GOP (designated N) generally remains constant. While N is constant, $X_{GOP}$ can be calculated, on a sliding window basis, by adding the coding complexity value $X_{pic}$ of the latest picture, and subtracting the coding complexity value from the oldest picture in the GOP. In this case, an updated value of $X_{GOP}$ is available after each frame or picture. However, N can change. If N changes, then $X_{GOP}$ for the newly defined GOP must be calculated by summing the coding complexity values $X_{pic}$ from the new number of preceding pictures in the newly defined GOP, as in equation (1).

As described above, it is possible that different channels operate at different frame or picture rates, e.g. the standard video frame rate (in the U.S.) is 29.97 frames per second, for film images it is 24 frames per second, and for cartoons it is 15 frames per second. It is also possible that different channels have different numbers of pictures or frames in a GOP. Thus, it is possible that different channels have different GOP time periods. In order to accurately allocate bits to channels under such conditions, the GOP coding complexity values of the plurality of channels in such situations are time normalized in the bit rate allocator 30 by dividing the GOP complexity value from equation for each channel by that channel's GOP time period (designated $GOP_{time}$). (See equation (2)). The normalized GOP coding complexity value

$$Xnorm_{GOP} = \frac{X_{GOP}}{GOP_{time}} \quad (2)$$

(designated $Xnorm_{GOP}$) is then used to allocate bits among the different channels. The timing of the sampling of the complexity values, and the generation of quota values for such systems will be discussed in more detail below.

Referring back to Fig. 5, as described above, for each macroblock, bit rate regulator 49 generates a quantizing scale factor signal $Q_{MB}$ for variable quantizer 46, and then receives a signal from the output buffer 48 indicating the number of bits $T_{MB}$ used to encode that macroblock. These signals may alternatively be supplied directly to the I/O controller 34 in the bit rate allocator 30 (of Fig. 4). The $\mu$P 31 may then calculate the appropriate coding complexity measure (from equation (1) or equations (1) and (2)) internally.

Furthermore, in order to simplify the transmission, the coding complexity value for each picture $X_{pic}$ may be scaled. In a preferred embodiment, this value is scaled, after multiplier 94, into an eight bit number. This scaled value is then passed to the bit rate allocator 30 (of Fig. 4). It may also be desirable for the computer system to maintain a file of the picture complexity values $X_{pic}$, for example in a mass storage device (not shown), for other reasons, such as allowing recalculation of the coding complexity value in the event N changes. Storage of an hour of 8 bit $X_{pic}$ values will take 108 kilobytes (kB) for standard video and 86 kB for film.

In the discussion below, $X^i$ will represent the currently available appropriate one of either $X_{GOP}$ (if all channels have the same GOP time period) or $Xnorm_{GOP}$ from the $i^{th}$ channel processor. The bit rate allocator 30 (of Fig. 1) generates respective quota (Q) signals representing allocations of the available bits in the transmission link for the next quota period based on the coding complexity values $X^i$ from all of the K channel processors forming the plurality of channel processors 10. The predetermined transmission link bit rate from the output terminal of the multiplexer 20 (of Fig. 1) (designated R) is allocated among the plurality 10 of channel processors, so that the $i^{th}$ channel processor receives a bit rate allocation designated $R^i$.

One method for allocating bit rates in the transmission link to the different channels is a linear allocation based on the currently available coding complexity $X^i$ of the preceding GOP period (on a sliding window basis, as discussed above) for all of the plurality 10 of channel processors (of Fig. 1). In this method, each processor i receives the same proportion $R^1$ of the total bit capacity R as the coding complexity of that encoder $X^i$

$$R^i = \frac{X^i}{\sum\limits_{j=1}^{K} X^j} R \qquad (3)$$

bears to the total coding complexity of all the encoders. (See equation (3)). However, it has been found that there is a lower bit rate allocation below which the quality of a reproduced image drops precipitously. In addition, in the illustrated embodiment, the bit rate allocations for the next quota period depends upon the complexity measures from the preceding GOP. Thus, if there is a scene change from a simple image to a complex image, there may be insufficient bits allocated to encode the new, complex, scene because the allocation for the new scene was based on the preceding, simple, scene.

An alternative method for allocating bit rates in the transmission link to different channels guarantees a minimum bit rate allocation $RG^i$ to each encoder i, and allocates the remaining bits linearly, as in equation (3). (See equation 4). Each channel may have a different guaranteed minimum bit rate depending upon the anticipated overall complexity of the video transmitted through the channel and/or pricing of the channel to the providers of the video signals.

$$R^i = RG^i + \frac{X^i}{\sum\limits_{j=1}^{K} X^j} [R - \sum\limits_{j=1}^{K} RG^j] \qquad (4)$$

Yet another alternative method for allocating bits in the transmission link to different channels provides a weighting factor $P^i$ for each encoder i and allocates bits proportionately according to the coding complexity values $X^i$, as weighted by the weighting factors $P^i$. (See equation (5)). As in the guaranteed minimum allocation method of equation , the weighting factors $P^i$ may depend on anticipated overall complexity of the video signal transmitted through the channel and/or pricing of the channel to the provider of the video signals.

$$R^i = \frac{P^i X^i}{\sum\limits_{j=1}^{K} P^j X^j} (R) \qquad (5)$$

A preferred method for allocating bits in the transmission link to different channels is a combination of the weighted allocation method of equation (5) and the guaranteed minimum allocation method of equation (4). In this method each channel is guaranteed a minimum allocation, and the remaining bits are allocated on a weighted proportion basis. (See equation (6)). As above, both the guaranteed minimum allocation and the weighting factors may depend upon the anticipated overall complexity of the video signal transmitted over the channel and/or pricing of the channel to the provider of the video signals.

$$R^i = RG^i + \cfrac{P^i X^i}{\sum\limits_{j=1}^{K} P^j X^j} \left[R - \sum\limits_{j=1}^{K} RG^j\right] \qquad (6)$$

It is possible to further refine the bit allocations $R^i$, in response to other parameters of the system. For example, it has been found that there is an upper bit rate allocation value above which no improvement in the quality of the reproduced image is visible. Thus, an allocation of bits in excess of this upper allocation value is wasteful of bits in the transmission link. Also, the operator of the transmission link may impose a maximum bit rate allocation $R_{max}$ (which can reflect the above upper bit rate allocation value) and/or a minimum bit rate allocation $R_{min}$ for each channel.

In addition, in order to minimize the potential for bit rate control oscillations and thus maximize bit rate control stability, there may be imposed a maximum increment of increase a and/or decrease β in the bit rate allocation from one quota period to the next for a channel. As above, the values of the upper bit rate allocation value, the maximum and minimum bit rate allocations, and maximum increments of increase and decrease, may be different for the different channels, and may depend on the anticipated overall complexity of the video signal to be transmitted through this channel and/or the pricing of the channel to the provider of the video signals. In addition, it is possible for the maximum and minimum increments of increase and decrease to vary dynamically according to the degree of emptiness or fullness of the buffers in the channel.

Furthermore, the allocated bit rates may be further refined in order to provide buffer management, e.g. to ensure that the output buffers of the CBR encoders 10 (of Fig. 1) and the input buffers of the corresponding receiver decoders (not shown) do not overflow or underflow. Explicit buffer management is not necessary if the encoder buffer size E is controlled as illustrated in inequality (7), where D is the fixed decoder buffer size. If the encoder buffer size is selected according to inequality (7), the bit rate allocation may vary from $R_{min}$ to $R_{max}$ without inducing overflow or underflow in either the encoder or decoder buffers. However, this method unduly limits the size of the encoder buffer, thus, unduly limiting the rate control flexibility.

$$E \leq D \; \frac{R_{min}}{R_{max}} \qquad (7)$$

An alternative buffer management scheme is adaptive and uses the current, instantaneous bit rates for buffer management, rather than the fixed parameters $R_{min}$ and $R_{max}$. Because the decoder buffer size was selected to be able to process data transmitted at the highest rate, $R_{max}$, the bit rate allocation can always be increased (to the system maximum, $R_{max}$) without overflowing the decoder buffer. However, there is an instantaneous minimum bit rate which must be maintained in order to assure that the data already in the encoder buffer gets transmitted to the decoder buffer before its decode time. Thus, a minimum bit rate allocation to ensure that the decoder buffer does not underflow must be dynamically calculated.

In dynamically calculating this minimum bit rate allocation, when decreasing the bit rate allocation, both a newly determined encoder buffer size, and the amount of data already placed in the encoder buffer in some preceding amount of time must be taken into account. The newly determined encoder buffer size for frame n, designated $E_n$, is determined in accordance with equation (8) in

$$E_n = \Delta R_{new} = \frac{R_{new}}{R_{max}} \; D \qquad (8)$$

which Δ is the system delay time, which a constant time delay between when a frame of video arrives at the encoder and when that frame is displayed at the decoder; D is the fixed decoder buffer size; and $R_{new}$ is the new proposed bit rate allocation. This buffer size ensures that in steady state at the new bit rate allocation, there will be no overflow or underflow in the encoder and decoder buffers.

However, as described above, if the newly proposed bit rate allocation has been decreased, then there is a transition period, equal to the system delay time $\Delta$, in which there may be too many bits already in the encoder buffer to be transmitted successfully to the decoder at the new lower rate. One proposed method for refining the newly proposed bit rate allocation is first to examine the number of bits, designated e, actually placed into the encoder buffer (buffer fullness) for the number of preceding frames in the system delay time $\Delta$, designated $\Gamma$. Then the maximum buffer fullness number for the preceding $\Gamma$ frames (designated $e_{max\,\Gamma}$) is compared to the newly determined encoder buffer size $E_n$, from equation (8). The minimum reduced bit rate allocation $R_{reduced}$ for channel i which guarantees that all the bits from the preceding $\Gamma$ frames will be transmitted successfully to the receiver decoder, then, is given in equation (9).

$$R^i_{reduced} = \frac{e_{max\,\Gamma}}{\Delta} \qquad (9)$$

If such limits are imposed in a multiplexer system, then after bit rate allocations have been calculated according to equations (3), (4), (5) or (6), those bit rate allocations are checked to determine whether they fall within the current upper and lower limits for that channel. First, the upper and lower limits for each channel i are determined. The upper limit bit rate allocation for any quota period k (designated $R^i_{upper}[k]$) is the minimum of: the maximum permissible increased allocation over the previous quota period k-1; and the maximum bit rate allocation limit. (See equation (10)). The lower limit bit allocation for any quota period

$$R^i_{upper}[k] = min\,\{\,R^i_{max,}\,(1 + \alpha)\,R^i\,[\,k\text{-}1]\,\} \qquad (10)$$

k, $R^i_{lower}[k]$, is the maximum of: the minimum bit rate allocation limit; the minimum permissible decreased allocation over the previous quota period k-1 and the minimum reduced bit rate allocation from equation (9). (See equation (11)). Then adjustments in the bit rate allocations for the channels are made.

$$R^i_{lower}[k] = max\,\{R^i_{min},\,(1 - \beta)\,R^i\,[k\text{-}1],\,e_{max\,\Gamma}\,/\,\Delta\,\} \qquad (11)$$

If the allocated bit rate for any channel exceeds either limiting value, the bit rate allocation for that channel is set to that limiting value, and the available remaining bit rate is reallocated among the other channels. For example, if the bit rate allocated to a channel i, as calculated in equation (3), (4), (5) or (6), is greater than the upper limit for that channel, as calculated in equation , then the bit rate for channel i is set to that upper limit $R^i_{upper}$ If, conversely, the bit rate is less than the lower limit calculated in equation (11), then the bit rate is set to that lower limit $R^i_{lower}$, (See equation (12)).

$$R^i[k] = \begin{cases} R^i_{lower}[k] & if\;R^i[k] < R^i_{lower}[k] \\ R^i_{upper}[k] & if\;R^i[k] > R^i_{upper}[k] \\ R^i[k] & otherwise \end{cases} \qquad (12)$$

If any of the bit rate allocations are changed by the limiting operations of equations (10), (11) and (12), then the remaining available bit rate is reallocated among the non-limited channels in accordance with equation (3), (4), (5) or (6). Then these channels are again checked against the limits in equations (10), (11) and (12). This cycle is repeated until all bit rate allocations are finalized. In the above embodiment, the coding complexity period is the GOP period, determined picture by picture on a sliding window basis, which is of sufficient duration that changes in bit rate allocations in a channel from one quota period to the next should generally be relatively small. Consequently, equations (10), (11) and (12) should only rarely be invoked.

The timing of the coding complexity sampling and generation of updated bit rate quotas based on the coding complexities is complicated if the channels are operating with different GOP time periods. There are two approaches which yield accurate coding complexity sampling and bit rate quota allocation in this situation. In the first approach, a constant quota period is calculated in such a manner that each channel has an equal number of quota periods in each GOP. In this approach, the number of sample and quota periods per GOP may vary from channel to channel, but, for any channel, the number of such sample and quota periods within a GOP is constant. In the second approach, a sample is taken, and new allocation generated whenever any channel begins a new GOP, and the number of bits allocated in the new quota is calculated taking into account the length of the time period from the previous sample to the current sample.

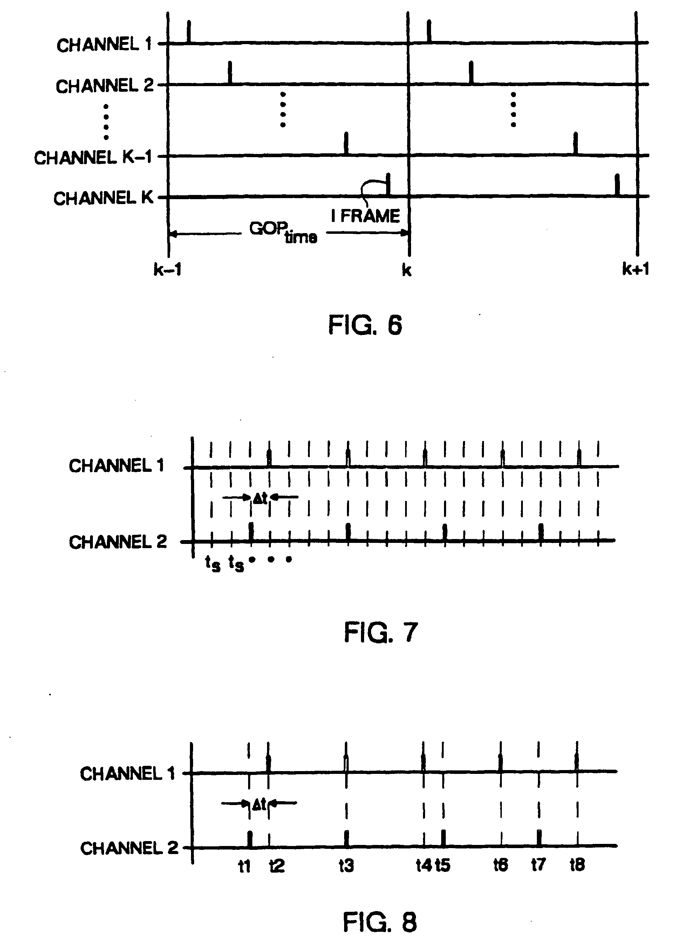

Fig. 7 is a timing diagram illustrating the sampling and quota updates in a system using the first approach. In order to simplify the drawing, only two channels are illustrated. In Fig. 7, channel 1 is an example of a channel transmitting standard video having a frame rate of 30 frames per second (in the U.S.). Channel 2 is an example of a channel transmitting a film having a frame rate of 24 frames per second. Each of the channels is assumed to have 12 frames per GOP. Channel 1, thus, starts a new GOP every 0.4 seconds, or 2.5 GOPs per second, while channel 2 starts a new GOP every 0.5 seconds, or 2 GOPs per second. The sampling rate selected is one sample every 0.1 seconds. Thus, in channel 1, there are four sample and quota updates in every GOP, and in channel 2 there are five sample and quota updates in every GOP. The sampling times, $t_s$, are illustrated by vertical dashed lines. Because the time periods between samples $\Delta t$ is constant (0.1 seconds), equations (3) through (12), above, may be used without any modification in calculating the bit rate allocations for the next sample period. These bit rate allocations may be accumulated and used in the channel processors 10 (of Fig. 1) according to the known scheme termed the "token and leaky bucket" scheme.

Fig. 8 is a timing diagram illustrating the sampling of coding complexity values and quota updating in a system using the second approach, described above. The respective channels illustrated in Fig. 8 are carrying the same signals as in Fig. 7. In Fig. 8, samples of the coding complexity values from all the channels are taken whenever any channel begins a new GOP. New allocations are generated based on the values of those samples, and the time period $\Delta t$ since the last sample. These sample times are illustrated in Fig. 8 as vertical dashed lines t1 - t8, where t2, t3, t4, t6 and t8 correspond to starts of GOPs in channel 1, and t1, t3, t5 and t7 correspond to starts of GOPs in channel 2. Although t3 illustrates a sampling time corresponding to starts of GOPs in both channel 1 and 2, there is no requirement that such a time occur.

At each sample time, the current coding complexity values (from the preceding GOP, available picture by picture on a sliding window basis) in all the channels are sampled. Equations (3) through (12) may be used to calculate the next bit rate quota proportions, but in determining the actual number of bits available to be allocated, the amount of time $\Delta t$ since the last sample must be taken into account. In order to properly compensate for the different sample periods, the total available bit rate R in equations (3) through (12) is replaced with the number of bits available for allocation, designated C, which is the product of the total available bit rate R and the sample period $\Delta t$, i.e. $C = R\Delta t$. The number of bits calculated by equations (3) through (12) are then allocated to the respective channel processors 10 (of Fig. 1) which, as above, use the "token and leaky bucket" scheme to accumulate and use the allocated bits. Either of the above two above approaches will accurately allocate bit rates to the respective channel processors 10 when the video signals from the different channels 5 have different GOP time periods.

The timing of the sampling of coding complexity values and the generation of updated bit rate quotas for the different channels may be simplified if all of the channels are operating at the same frame rate, and have the same number of frames in a GOP, i.e. all the channels have the same GOP time period, $GOP_{time}$. Fig. 6 is a timing diagram illustrating coding complexity sample and quota update timing in such a system. In Fig. 6, each horizontal line corresponds to a respective channel I - K. The short vertical lines extending upward from the horizontal lines represent the time when coding of an I frame is begun for that channel, which is considered to be the beginning of a GOP for that channel. The time period for a GOP, $GOP_{time}$, is equal in all of the channels, but, as can be seen, the beginning times of the GOPs for the respective channels are different. In fact, it has been found desirable to have different starting times for the GOPs for the respective channels so that coding of I frames do not overlap. This increases the complexity variations across the different channels.

It has been found that so long as the same number of I frames, P frames, and B frames are taken into account in calculating the coding complexity value, it does not matter that those frames come from different GOPs. Thus, as shown by the solid lines extending across all the channel's time axes, a coding complexity value sample may be taken simultaneously from all the channels at any time within a GOP. Updates of the bit rate quotas for all of the channels may then be generated from that sample and transmitted back to the channel processors 10 (of Fig. 1).

The above multiplexer system has been described as a collocated system. However, the plurality 10 of channel processors could reside in remote locations from the bit rate allocator 30 and the multiplexer 20. In such a system, communication links would be established between the encoders and the bit rate allocator. In this case, some portion of the bits transmitted between the processors 10 and the multiplexer could be dedicated to transmission of complexity information from the processors.

**Claims**

1. A multiplexing system, comprising:

   - a plurality of sources (5) of data signals representing respective sequences of pictures extending over a given GOP time period;
   - a multiplexer (20) having a plurality of input terminals (1-K), and an output terminal (15),
   - a plurality of channel processors (10), each having a data input terminal coupled to a respective one of the sources (5), a complexity output terminal adapted to produce a signal representative of the complexity of the entire sequence of pictures represented by the data signal at the data input terminal, a control input terminal, and a data output terminal coupled to a respective one of the input terminals (1-K) of the multiplexer (20) and adapted to produce an encoded signal at a constant bit rate set in response to the signal at the control input terminal; and
   - a bit rate allocator (30), having a plurality of pairs of associated input and output terminals, each pair associated with a respective one of the channel processors, the input terminal of each pair coupled to the complexity output terminal of the associated channel processor, and the output terminal of each pair coupled to the control input terminal of the associated channel processor and adapted to generate a bit rate quota signal such that each channel processor (10) is allocated a bit rate related to the complexity represented by the signal at the associated input terminal and to the combined complexity represented by the signals at the input terminals of all of the plurality of pairs wherein:
   - said multiplexer (20) is adapted to produce a signal at its output terminal (15) having a predetermined constant bit rate,
   - each data signal source (5) is adapted to produce a data signal that is a video signal comprising picture data of said sequence of pictures comprising a number of frames, wherein said given GOP time period is the same for each of the plurality of channel processors,
   - each channel processor (10) is adapted to generate the complexity representative signal during encoding of the sequence of pictures represented by the data signal at the channel processor data input terminal; and
   - the bit rate allocator (30) is adapted to generate a separate bit rate quota signal for each channel processor, the separate bit rate quota signals being valid for the entire GOP time period following the given GOP time period, in response to the complexity representative signals, such that each channel processor (10) is allocated a proportion of the predetermined constant bit rate based on the proportion of the complexity represented by the signal at the associated input terminal of each pair to the combined complexity represented by the signals at the input terminals of all of the plurality of pairs.

2. The multiplexing system of claim 1, wherein the bit rate allocator (30) is adapted to generate respective bit rate quota signals at the output terminal of each pair of associated input and output terminals such that a channel processor (10) having a relatively higher complexity signal at its data input terminal will receive a relatively higher bit rate quota signal than a channel processor (10) having a relatively lower complexity signal.

3. The multiplexing system of claim 2, wherein:

   - the multiplexer (20) is adapted to produce a signal at its output terminal having a predetermined constant bit rate;
   - each channel processor (10) is assigned a respective predetermined minimum bit rate; and
   - the bit rate allocator (30) is adapted to generate respective bit rate quota signals at the output terminal of each pair of associated input and output terminals such that each channel processor (10) is allocated its assigned predetermined minimum bit rate, and further allocated a proportion of a remaining bit rate, the remaining bit rate being equal to the predetermined constant bit rate less the previously allocated predetermined minimum bit rates, the further allocated proportion being equal to the proportion of the complexity represented by the signal at the associated input terminal of the pair to the combined complexity represented by the signals at the input terminals of all of the plurality of pairs.

4. The multiplexing system of claim 2, wherein:

   - the multiplexer (20) is adapted to produce a signal at its output terminal (15) having a predetermined constant bit rate;
   - each channel processor (10) is assigned a respective predetermined weighting factor; and
   - the bit rate allocator (30) is adapted to generate respective bit rate quota signals at the output terminal of each pair of associated input and output terminals such that each channel processor is allocated a proportion of the predetermined constant bit rate equal to the proportion of the complexity represented by the signal at the associated input terminal of the pair to the combined complexity represented by the signals at the input terminals of all of the plurality of pairs, weighted by the predetermined weighting factor assigned to the associated channel processor.

5. The multiplexing system of claim 2, wherein:

- the multiplexer (20) is adapted to produce a signal at its output terminal (15) having a predetermined constant bit rate;
- each channel processor (10) is assigned a respective predetermined minimum bit rate and a predetermined weighting factor; and
- the bit rate allocator (30) is adapted to generate respective bit rate quota signals at the output terminal of each pair of associated input and output terminals such that each channel processor is allocated its assigned predetermined minimum bit rate, and further allocated a proportion of a remaining bit rate, the remaining bit rate being equal to the predetermined constant bit rate less the previously allocated predetermined minimum bit rates, the further allocated proportion being equal to the proportion of the complexity represented by the signal at the associated input terminal of the pair to the combined complexity represented by the signals at the input terminals of all of the plurality of pairs, weighted by the predetermined weighting factor assigned to the associated channel processor.

6. The multiplexing system of claim 2, wherein:

- each channel processor (10) is assigned a respective predetermined bit rate allocation limit; and
- the bit rate allocator (30), after generating respective bit rate quota signals allocating bit rates to respective channel processors (10), is adapted to compare the respective bit rate allocations to the respective predetermined bit rate allocation limits, and if a bit rate allocation exceeds an assigned predetermined bit rate allocation limit, to generate a bit rate quota signal representing the predetermined bit rate allocation limit, instead of the previously generated bit rate allocation for the associated channel processor.

7. The multiplexing system of claim 6, where the predetermined bit rate allocation limit is a maximum bit rate allocation.

8. The multiplexing system of claim 6, where the predetermined bit rate allocation limit is a minimum bit rate allocation.

9. The multiplexing system of claim 2, wherein:

- each channel processor (10) is assigned a respective predetermined bit rate allocation increment limit; and
- the bit rate allocator (30), after generating respective bit rate quota signals representing allocated bit rates for associated channel processors (10), is adapted to compare the respective bit rate allocations to corresponding bit rate allocations represented by immediately preceding respective bit rate quota signals to determine respective bit rate allocation increments, and if a bit rate allocation increment exceeds an assigned predetermined bit rate allocation increment limit, to generate a bit rate quota signal representing the bit rate allocation represented by the immediately preceding respective bit rate quota signal changed by the predetermined bit rate allocation increment limit, instead of the previously generated bit rate allocation for the associated channel processor.

10. The multiplexing system of claim 9, wherein the predetermined bit rate allocation increment limit is a maximum increment of increase of bit rate.

11. The multiplexing system of claim 9, wherein the predetermined bit rate allocation increment limit is a maximum increment of decrease of bit rate.

12. The multiplexing system of claim 2, wherein:

- each channel processor (10) includes an output buffer (48) having a buffer capacity, for temporarily storing data to be supplied to the multiplexer (20) within a predetermined period of time; and
- the bit rate allocator (30), after generating respective bit rate quota signals representing allocated bit rates for associated channel processors (10), is adapted to compare the respective bit rate allocations to corresponding bit rate allocations represented by immediately preceding respective bit rate quota signals, and if a bit rate allocation has decreased, to determine whether the data temporarily stored in the output buffer of the associated channel processor will be supplied to the multiplexer (20) within the predetermined period of time at the decreased bit rate allocation, and if not, to generate a bit rate quota signal representing a new bit rate allocation which will allow the data temporarily stored in the output buffer of the associated channel processor to be supplied to the multiplexer (20) within the predetermined period of time, instead of the previously generated bit rate allocation for the associated channel processor.

13. The multiplexing system of claim 1, wherein:

each of the plurality of channel processors (10) comprises:

- a constant bit rate encoder (14) having a data path coupled between the data input terminal (5) and the data output terminal of the channel processor (10), and a quota input terminal (Q) coupled to the control input terminal (CONTROL) of the channel processor (10), for generating the encoded signal; and
- a complexity analyzer (16), coupled between the data input terminal (5) and the complexity output terminal (COMPLEXITY) of the channel processor (10), for analyzing the complexity of the signal at the data input terminal (5), and

generating the complexity representative signal.

14. The multiplexing system of claim 13, wherein:

the constant bit rate encoder (14) comprises:

- a variable quantizer (46), coupled in the data path of the constant bit rate encoder (14) and having a control input terminal ($Q_{MB}$), for producing a quantized signal having a quantizing step size defined in response to the signal at the control input terminal ($Q_{MB}$); and
- a bit rate regulator (49), coupled between the data output terminal ($T_{MB}$) of the channel processor (10) and the control input terminal ($Q_{MB}$) of the variable quantizer (46), for varying the quantizing step size in response to the bit rate of the encoded signal at the output terminal (DATA OUT) of the constant bit rate encoder (14), and the signal at the quota input terminal (Q) of the constant bit rate encoder (14); and wherein:
- the complexity analyzer (16) comprises:

- complexity determining circuitry (92-99), having respective input terminals coupled to the control input terminal ($O_{MB}$) of the variable quantizer (46), and the output terminal of the constant bit rate encoder (DATA OUT), for generating the complexity representative signal (Xplc) being related to the average quantizing step size and the bit rate of the encoded signal at the output terminal of the constant bit rate encoder (DATA OUT).

15. The multiplexing system of claim 14, wherein the complexity determining circuitry (92-99) is adapted to generate the complexity representative signal (Xpic) being directly proportional to the average quantizing step size ($Q_{MB}$) and to the bit rate ($T_{MB}$) of the encoded signal at the output terminal of the constant bit rate encoder (DATA OUT).

16. The multiplexing system of claim 15, wherein the complexity determining circuitry (92-99) is adapted to generate the complexity representative signal (Xpic) being the product of the average quantizing step size ($Q_{MB}$) and the bit rate ($T_{MB}$) of the encoded signal at the output terminal of the constant bit rate encoder (DATA OUT).

17. The multiplexing system of claim 13, wherein the constant bit rate encoder (14) comprises:

- a variable quantizer (46), coupled in the data path of the constant bit rate encoder (14) and having a control input terminal ($Q_{MB}$), for producing a quantized signal having a quantizing step size defined in response to a quantizing step size signal at the control input terminal; and
- a bit rate regulator (49), coupled between the data output terminal (DATA OUT) of the channel processor (10) and the control input terminal ($O_{MB}$) of the variable quantizer (46) and having a bit rate control input terminal (Q) coupled to output terminal of the associated pair of input and output terminals from the bit rate allocator (30), for generating the quantizing step size signal at the control input terminal ($Q_{MB}$) of the variable quantizer (46) to control the quantizing step size in response to the bit rate of the encoded signal at the output terminal of the constant bit rate encoder (DATA OUT), and the signal at the bit rate control input terminal (Q); and wherein:
- the complexity analyzer (16) comprises:

- complexity determining circuitry (92-99), having respective input terminals coupled to the control input terminal ($Q_{MB}$) of the variable quantizer (46), and the output terminal of the constant bit rate encoder (DATA OUT), for generating the complexity representative signal (Xpic) being related to the average quantizing step size and the bit rate of the encoded signal at the output terminal (DATA OUT) of the constant bit rate encoder (14).

**18.** The multiplexing system of claim 17, wherein:

- the constant bit rate encoder (14) is adapted to operate according to the motion picture experts group (MPEG) standard, to divide each sequential picture in the video signal at its data input terminal (5) into a predetermined number ($N_{MB}$) of macroblocks, and to sequentially encode each of the predetermined number ($N_{MB}$) of macroblocks into respective numbers of bits ($T_{MB}$) at its data output terminal (DATA OUT) to produce a sequence of encoded pictures;
- the bit rate regulator (49) is adapted to produce respective quantizing step size control signals ($Q_{MB}$) for each of the predetermined number ($N_{MB}$) of macroblocks; and
- the complexity determining circuit (92-99) comprises:
- a first accumulator (92,93), coupled to the data output terminal of the constant bit rate encoder (DATA OUT), for summing the respective numbers of bits ($T_{MB}$) produced at the data output terminal (DATA OUT) of the constant bit rate encoder (14) for each encoded macroblock, to produce a total number of bits (Tpic) in each one of the encoded sequential pictures;
- a second accumulator (96,97), coupled to the bit rate regulator (49), for summing the respective quantizing step size signals ($Q_{MB}$) for each macroblock in each one of the sequential pictures;
- an averaging circuit (98,99), coupled to the second accumulator (96,97), for calculating the average quantizing step size for the predetermined number ($N_{MB}$) of macroblocks in each one of the sequential pictures, to produce an average quantizing step size signal ($Q_{MB}$) for each one of the sequential pictures;
- a multiplier (94), coupled to the first accumulator (92,93) and the averaging circuit (98,99), for multiplying the total number of bits (Tpic) times the average quantizing step size signal ($Q_{MB}$), to produce a picture complexity signal (Xpic) for each one of the sequential pictures; and
- a third accumulator (94,95) for summing the respective picture complexity signals for each of the pictures in a group of pictures, to produce the complexity representative signal (XGOP).

**Patentansprüche**

**1.** Multiplexsystem, das umfasst:

- mehrere Quellen (5) von Datensignalen, die jeweilige Bildfolgen repräsentieren, die über eine gegebene GOP-Zeitdauer verlaufen;
- einen Multiplexer (20) mit mehreren Eingangsanschlüssen (1-K) und mit einem Ausgangsanschluss (15),
- mehrere Kanalprozessoren (10), jeweils mit einem Dateneingangsanschluss, der jeweils mit einer der Quellen (5) gekoppelt ist, mit einem Komplexitätsausgangsanschluss, der so ausgelegt ist, dass er ein Signal erzeugt, das repräsentativ für die Komplexität der gesamten durch das Datensignal an dem Dateneingangsanschluss repräsentierten Bildfolge ist, mit einem Steuereingangsanschluss und mit einem Datenausgangsanschluss, der jeweils mit einem der Eingangsanschlüsse (1-K) des Multiplexers (20) gekoppelt ist und so ausgelegt ist, dass er ein codiertes Signal mit einer in Reaktion auf das Signal an dem Steuereingangsanschluss eingestellten konstanten Bitrate erzeugt; und
- einen Bitratenzuordner (30) mit mehreren Paaren zugehöriger Eingangs- und Ausgangsanschlüsse, wobei jedes Paar jeweils zu einem der Kanalprozessoren zugehörig ist, wobei der Eingangsanschluss jedes Paars mit dem Komplexitätsausgangsanschluss des zugehörigen Kanalprozessors gekoppelt ist und wobei der Ausgangsanschluss jedes Paars mit dem Steuereingangsanschluss des zugehörigen Kanalprozessors gekoppelt ist und so ausgelegt ist, dass er ein Bitratenquotensignal erzeugt, sodass jedem Kanalprozessor (10) eine Bitrate zugeordnet wird, die sich auf die durch das Signal an dem zugehörigen Eingangsanschluss repräsentierte Komplexität und auf die durch die Signale an den Eingangsanschlüssen aller der mehreren Paare repräsentierte gemeinsame Komplexität bezieht, wobei
- der Multiplexer (20) so ausgelegt ist, dass er an seinem Ausgangsanschluss (15) ein Signal mit einer vorgegebenen konstanten Bitrate erzeugt,
- jede Datensignalquelle (5) so ausgelegt ist, dass sie ein Datensignal erzeugt, das ein Videosignal ist, das Bilddaten der Bildfolge umfasst, die eine Anzahl von Vollbildern umfasst, wobei die gegebene GOP-Zeitdauer für jeden der mehreren Kanalprozessoren dieselbe ist,

- wobei jeder Kanalprozessor (10) so ausgelegt ist, dass er während des Codierens der durch das Datensignal an dem Kanalprozessor-Dateneingangsanschluss repräsentierten Bildfolge das für die Komplexität repräsentative Signal erzeugt; und

- der Bitratenzuordner (30) so ausgelegt ist, dass er in Reaktion auf die für die Komplexität repräsentativen Signale für jeden Kanalprozessor ein separates Bitratenquotensignal erzeugt, wobei die separaten Bitratenquotensignale für die gesamte GOP-Zeitdauer nach der gegebenen GOP-Zeitdauer gültig sind, sodass jedem Kanalprozessor (10) ein Verhältnis der vorgegebenen konstanten Bitrate zugeordnet wird, das auf dem Verhältnis der durch das Signal an dem zugehörigen Eingangsanschluss jedes Paars repräsentierten Komplexität zu der durch die Signale an den Eingangsanschlüssen aller der mehreren Paare repräsentierten gemeinsamen Komplexität beruht.

2. Multiplexsystem gemäß Anspruch 1, bei dem der Bitratenzuordner (30) so ausgelegt ist, dass er an dem Ausgangsanschluss jedes Paars zugehöriger Eingangs- und Ausgangsanschlüsse jeweilige Bitratenquotensignale erzeugt, sodass ein Kanalprozessor (10) mit einem verhältnismäßig höheren Komplexitätssignal an seinem Dateneingangsanschluss ein verhältnismäßig höheres Bitratenquotensignal als ein Kanalprozessor (10) mit einem verhältnismäßig niedrigeren Komplexitätssignal empfängt.

3. Multiplexsystem gemäß Anspruch 2, bei dem:

- der Multiplexer (20) so ausgelegt ist, dass er an seinem Ausgangsanschluss ein Signal mit einer vorgegebenen konstanten Bitrate erzeugt;
- jedem Kanalprozessor (10) eine jeweilige vorgegebene minimale Bitrate zugewiesen ist; und
- der Bitratenzuordner (30) so ausgelegt ist, dass er an dem Ausgangsanschluss jedes Paars zugehöriger Eingangs- und Ausgangsanschlüsse jeweilige Bitratenquotensignale erzeugt, sodass jedem Kanalprozessor (10) seine zugewiesene vorgegebene minimale Bitrate zugeordnet wird und ferner ein Verhältnis einer verbleibenden Bitrate zugeordnet wird, wobei die verbleibende Bitrate gleich der vorgegebenen konstanten Bitrate abzüglich der zuvor zugeordneten vorgegebenen minimalen Bitraten ist, wobei das ferner zugeordnete Verhältnis gleich dem Verhältnis der durch das Signal an dem zugehörigen Eingangsanschluss des Paars repräsentierten Komplexität zu der durch die Signale an den Eingangsanschlüssen aller der mehreren Paare repräsentierten gemeinsamen Komplexität ist.

4. Multiplexsystem gemäß Anspruch 2, bei dem:

- der Multiplexer (20) so ausgelegt ist, dass er an seinem Ausgangsanschluss (15) ein Signal mit einer vorgegebenen konstanten Bitrate erzeugt;
- jedem Kanalprozessor (10) eine jeweiliger vorgegebener Gewichtungsfaktor zugewiesen ist; und
- der Bitratenzuordner (30) so ausgelegt ist, dass er an dem Ausgangsanschluss jedes Paars zugehöriger Eingangs- und Ausgangsanschlüsse jeweilige Bitratenquotensignale erzeugt, sodass jedem Kanalprozessor ein Verhältnis der vorgegebenen konstanten Bitrate zugeordnet wird, das gleich dem Verhältnis der durch das Signal an dem zugehörigen Eingangsanschluss des Paars repräsentierten Komplexität zu der durch die Signale an den Eingangsanschlüssen aller der mehreren Paare repräsentierten gemeinsamen Komplexität, gewichtet durch den dem zugehörigen Kanalprozessor zugewiesenen vorgegebenen Gewichtungsfaktor, ist.

5. Multiplexsystem gemäß Anspruch 2, bei dem:

- der Multiplexer (20) so ausgelegt ist, dass er an seinem Ausgangsanschluss (15) ein Signal mit einer vorgegebenen konstanten Bitrate erzeugt;
- jedem Kanalprozessor (10) eine jeweilige vorgegebene minimale Bitrate und ein vorgegebener Gewichtungsfaktor zugewiesen sind; und
- der Bitratenzuordner (30) so ausgelegt ist, dass er an dem Ausgangsanschluss jedes Paars zugehöriger Eingangs- und Ausgangsanschlüsse jeweilige Bitratenquotensignale erzeugt, sodass jedem Kanalprozessor seine zugewiesene vorgegebene minimale Bitrate zugeordnet wird und ferner ein Verhältnis einer verbleibenden Bitrate zugeordnet wird, wobei die verbleibende Bitrate gleich der vorgegebenen konstanten Bitrate abzüglich der zuvor zugeordneten vorgegebenen minimalen Bitraten ist, wobei das ferner zugeordnete Verhältnis gleich dem Verhältnis der durch das Signal an dem zugehörigen Eingangsanschluss des Paars repräsentierten Komplexität zu der durch die Signale an den Eingangsanschlüssen aller der mehreren Paare repräsentierten gemeinsamen Komplexität, gewichtet durch den dem zugehörigen Kanalprozessor zugewiesenen vorgegebenen Gewichtungsfaktor, ist.

**6.** Multiplexsystem gemäß Anspruch 2, bei dem:

- jedem Kanalprozessor (10) ein jeweiliger vorgegebener Bitratenzuordnungs-Grenzwert zugewiesen ist; und
- der Bitratenzuordner (30) nach dem Erzeugen jeweiliger Bitratenquotensignale, die den jeweiligen Kanalprozessoren (10) Bitraten zuordnen, so ausgelegt ist, dass er die jeweiligen Bitratenzuordnungen mit den jeweiligen vorgegebenen Bitratenzuordnungs-Grenzwerten vergleicht, und dann, wenn eine Bitratenzuordnung einen zugewiesenen vorgegebenen Bitratenzuordnungs-Grenzwert übersteigt, anstelle der zuvor erzeugten Bitratenzuordnung für den zugehörigen Kanalprozessor ein Bitratenquotensignal erzeugt, das den vorgegebenen Bitratenzuordnungs-Grenzwert repräsentiert.

**7.** Multiplexsystem gemäß Anspruch 6, bei dem der vorgegebene Bitratenzuordnungs-Grenzwert die Zuordnung einer maximalen Bitrate ist.

**8.** Multiplexsystem gemäß Anspruch 6, bei dem der vorgegebene Bitratenzuordnungs-Grenzwert die Zuordnung einer minimalen Bitrate ist.

**9.** Multiplexsystem gemäß Anspruch 2, bei dem:

- jedem Kanalprozessor (10) ein jeweiliger vorgegebener Bitratenzuordnungsinkrement-Grenzwert zugewiesen ist; und
- der Bitratenzuordner (30) nach dem Erzeugen jeweiliger Bitratenquotensignale, die zugeordnete Bitraten für zugehörige Kanalprozessoren (10) repräsentieren, so ausgelegt ist, dass er die jeweiligen Bitratenzuordnungen mit den entsprechenden durch unmittelbar vorhergehende jeweilige Bitratenquotensignale repräsentierten Bitratenzuordnungen vergleicht, um jeweilige Bitratenzuordnungsinkremente zu bestimmen, und dann, wenn ein Bitratenzuordnungsinkrement einen zugewiesenen vorgegebenen Bitratenzuordnungsinkrement-Grenzwert übersteigt, anstelle der zuvor erzeugten Bitratenzuordnung für den zugehörigen Kanalprozessor ein Bitratenquotensignal erzeugt, das die Bitratenzuordnung repräsentiert, die durch das unmittelbar vorhergehende jeweilige Bitratenquotensignal, geändert um den vorgegebenen Bitratenzuordnungsinkrement-Grenzwert, repräsentiert wird.

**10.** Multiplexsystem gemäß Anspruch 9, bei dem der vorgegebene Bitratenzuordnungsinkrement-Grenzwert ein maximales Inkrement der Zunahme der Bitrate ist.

**11.** Multiplexsystem gemäß Anspruch 9, bei dem der vorgegebene Bitratenzuordnungsinkrement-Grenzwert ein maximales Inkrement der Abnahme der Bitrate ist.

**12.** Multiplexsystem gemäß Anspruch 2, bei dem:

- jeder Kanalprozessor (10) einen Ausgangspuffer (48) mit einer Pufferkapazität zum vorübergehenden Speichern von Daten enthält, die dem Multiplexer (20) innerhalb einer vorgegebenen Zeitdauer zugeführt werden sollen; und
- der Bitratenzuordner (30) nach dem Erzeugen jeweiliger Bitratenquotensignale, die zugeordnete Bitraten für zugehörige Kanalprozessoren (10) repräsentieren, so ausgelegt ist, dass er die jeweiligen Bitratenzuordnungen mit den entsprechenden durch die unmittelbar vorhergehenden jeweiligen Bitratenquotensignale repräsentierten Bitratenzuordnungen vergleicht, und dann, wenn eine Bitratenzuordnung abgenommen hat, bestimmt, ob die vorübergehend in dem Ausgangspuffer des zugehörigen Kanalprozessors gespeicherten Daten innerhalb der vorgegebenen Zeitdauer bei der verringerten Bitratenzuordnung dem Multiplexer (20) zugeführt werden, und wenn nicht, ein Bitratenquotensignal erzeugt, das eine neue Bitratenzuordnung repräsentiert, die zulässt, dass die vorübergehend in dem Ausgangspuffer des zugehörigen Kanalprozessors gespeicherten Daten anstelle der zuvor erzeugten Bitratenzuordnung für den zugehörigen Kanalprozessor innerhalb der vorgegebenen Zeitdauer dem Multiplexer (20) zugeführt werden.

**13.** Multiplexsystem gemäß Anspruch 1, bei dem:

jeder der mehreren Kanalprozessoren (10) umfasst:

- einen Codierer (14) konstanter Bitrate mit einem zwischen den Dateneingangsanschluss (5) und den Datenausgangsanschluss des Kanalprozessors (10) gekoppelten Datenweg und mit einem mit dem Steuereingangsanschluss (CONTROL) des Kanalprozessors (10) gekoppelten Quoteneingangsanschluss (Q) zum Erzeugen des codierten Signals; und

- einen Komplexitätsanalysator (16), der zwischen den Dateneingangsanschluss (5) und den Komplexitätsausgangsanschluss (COMPLEXITY) des Kanalprozessors (10) gekoppelt ist, um die Komplexität des Signals an dem Dateneingangsanschluss (5) zu analysieren und um das für die Komplexität repräsentative Signal zu erzeugen.

**14.** Multiplexsystem gemäß Anspruch 13, bei dem:

- der Codierer (14) konstanter Bitrate umfasst:
- einen variablen Quantisierer (46), der in den Datenweg des Codierers (14) konstanter Bitrate gekoppelt ist und einen Steuereingangsanschluss ($Q_{MB}$) aufweist, um Folgendes zu erzeugen:
- ein quantisiertes Signal mit einer in Reaktion auf das Signal an dem Steuereingangsanschluss ($Q_{MB}$)) definierten Quantisierungsschrittweite; und
- einen Bitratenregulierer (49), der zwischen den Datenausgangsausschluss ($T_{MB}$) des Kanalprozessors (10) und den Steuereingangsanschluss ($Q_{MB}$)) des variablen Quantisierers (46) gekoppelt ist, um in Reaktion auf die Bitrate des codierten Signals an dem Ausgangsanschluss (DATA OUT) des Codierers (14) konstanter Bitrate und des Signals an dem Quoteneingangsanschluss (Q) des Codierers (14) konstanter Bitrate die Quantisierungsschrittweite zu ändern; und wobei:
- der Komplexitätsanalysator (16) umfasst:
- eine Komplexitätsbestimmungs-Schaltungsanordnung (92-99) mit jeweiligen Eingangsanschlüssen, die mit dem Steuereingangsanschluss ($Q_{MB}$) des variablen Quantisierers (46) und mit dem Ausgangsanschluss (DATA OUT) des Codierers konstanter Bitrate gekoppelt sind, um das für die Komplexität repräsentative Signal (Xpic) zu erzeugen, das sich auf die mittlere Quantisierungsschrittweite und auf die Bitrate des codierten Signals an dem Ausgangsanschluss (DATA OUT) des Codierers konstanter Bitrate bezieht.

**15.** Multiplexsystem gemäß Anspruch 14, bei dem die Komplexitätsbestimmungs-Schaltungsanordnung (92-99) so ausgelegt ist, dass sie das für die Komplexität repräsentative Signal (Xpic) erzeugt, das direkt proportional zu der mittleren Quantisierungsschrittweite ($Q_{MB}$)) und zu der Bitrate ($T_{MB}$) des codierten Signals an dem Ausgangsanschluss (DATA OUT) des Codierers konstanter Bitrate ist.

**16.** Multiplexsystem gemäß Anspruch 15, bei dem die Komplexitätsbestimmungs-Schaltungsanordnung (92-99) so ausgelegt ist, dass sie das für die Komplexität repräsentative Signal (Xpic) erzeugt, das das Produkt der mittleren Quantisierungsschrittweite ($Q_{MB}$) und der Bitrate ($T_{MB}$) des codierten Signals an dem Ausgangsanschluss (DATA OUT) des Codierers konstanter Bitrate ist.

**17.** Multiplexsystem gemäß Anspruch 13, bei dem der Codierer (14) konstanter Bitrate umfasst:

- einen variablen Quantisierer (46), der in den Datenweg des Codierers (14) konstanter Bitrate gekoppelt ist und der einen Steuereingangsanschluss ($Q_{MB}$) zum Erzeugen eines quantisierten Signals mit einer in Reaktion auf ein Quantisierungsschrittweitensignal an dem Steuereingangsanschluss definierten Quantisierungsschrittweite aufweist; und
- einen Bitratenregulierer (49), der zwischen den Datenausgangsanschluss (DATA OUT) des Kanalprozessors (10) und den Steuereingangsanschluss ($Q_{MB}$) des variablen Quantisierers (46) gekoppelt ist und einen Bitraten-Steuereingangsanschluss (Q) aufweist, der mit dem Ausgangsanschluss des zugehörigen Paars von Eingangs- und Ausgangsanschlüssen von dem Bitratenzuordner (30) gekoppelt ist, um an dem Steuereingangsanschluss ($Q_{MB}$) des variablen Quantisierers (46) das Quantisierungsschrittweitensignal zu erzeugen, um in Reaktion auf die Bitrate des codierten Signals an dem Ausgangsanschluss (DATA OUT) des Codierers konstanter Bitrate und auf das Signal an dem Bitraten-Steuereingangsanschluss (Q) die Quantisierungsschrittweite zu steuern; und wobei
- der Komplexitätsanalysator (16) umfasst:
- eine Komplexitätsbestimmungs-Schaltungsanordnung (92-99) mit jeweiligen Eingangsanschlüssen, die mit dem Steuereingangsanschluss ($Q_{MB}$) des variablen Quantisierers (46) und mit dem Ausgangsanschluss (DATA OUT) des Codierers konstanter Bitrate gekoppelt sind, um das für die Komplexität repräsentative Signal (Xpic) zu erzeugen, das sich auf die mittlere Quantisierungsschrittweite und auf die Bitrate des codierten Signals an dem Ausgangsanschluss (DATA OUT) des Codierers (14) konstanter Bitrate bezieht.

**18.** Multiplexsystem gemäß Anspruch 17, bei dem:

**EP 0 803 163 B1**

- der Codierer (14) konstanter Bitrate so ausgelegt ist, dass er gemäß der Motion-Picture-Experts-Group-Norm (MPEG-Norm) arbeitet, um jedes aufeinanderfolgende Bild in dem Videosignal an seinem Dateneingangsanschluss (5) in eine vorgegebene Anzahl ($N_{MB}$) von Makroblöcken zu teilen und um jeden der vorgegebenen Anzahl ($N_{MB}$) von Makroblöcken nacheinander in jeweilige Anzahlen von Bits ($T_{MB}$) an seinem Datenausgangsanschluss (DATA OUT) zu codieren, um eine Folge codierter Bilder zu erzeugen;

- der Bitratenregulierer (49) so ausgelegt ist, dass er für jeden der vorgegebenen Anzahl ($N_{MB}$) von Makroblöcken jeweilige Quantisierungsschrittweiten-Steuersignale ($Q_{MB}$) erzeugt; und

- die Komplexitätsbestimmungsschaltung (92-99) umfasst:

- einen ersten Akkumulator (92, 93), der mit dem Datenausgangsanschluss (DATA OUT) des Codierers konstanter Bitrate gekoppelt ist, um die jeweiligen Anzahlen von Bits ($T_{MB}$), die bei dem Datenausgangsanschluss (DATA OUT) des Codierers (14) konstanter Bitrate für jeden codierten Makroblock erzeugt werden, zu summieren, um eine Gesamtzahl von Bits (Tpic) in jedem der codierten aufeinanderfolgenden Bilder zu erzeugen;

- einen zweiten Akkumulator (96, 97), der mit dem Bitratenregulierer (49) gekoppelt ist, um die jeweiligen Quantisierungsschrittweitensignale ($Q_{MB}$) für jeden Makroblock in jedem der aufeinanderfolgenden Bilder zu summieren;

- eine Mittelungsschaltung (98, 99), die mit dem zweiten Akkumulator (96, 97) gekoppelt ist, um für die vorgegebene Anzahl ($N_{MB}$) von Makroblöcken in jedem der aufeinanderfolgenden Bilder die mittlere Quantisierungsschrittweite zu berechnen, um für jedes der aufeinanderfolgenden Bilder ein Signal ($Q_{MB}$) der mittleren Quantisierungsschrittweite zu erzeugen;

- einen Multiplizierer (94), der mit dem ersten Akkumulator (92, 93) und mit der Mittelungsschaltung (98, 99) gekoppelt ist, um die Gesamtzahl der Bits (Tpic) mit dem Signal ($Q_{MB}$) der mittleren Quantisierungsschrittweite zu multiplizieren, um für jedes der aufeinanderfolgenden Bilder ein Bildkomplexitätssignal (Xpic) zu erzeugen; und

- einen dritten Akkumulator (94, 95) zum Summieren der jeweiligen Bildkomplexitätssignale für jedes der Bilder in einer Bildergruppe, um das für die Komplexität repräsentative Signal (XGOP) zu erzeugen.

**Revendications**

1.  Système de multiplexage comportant :

    - une pluralité de sources (5) de signaux de données représentant des séquences respectives d'images s'étendant sur une durée donnée de groupe d'images (GOP- Group of Pictures) ;
    - un multiplexeur (20) comportant une pluralité de bornes d'entrée (1 à K) et une borne de sortie (15),
    - une pluralité de processeurs de canaux (10), chacun comportant une borne d'entrée de données connectée à une des sources (5) respectives, une borne de sortie de complexité conçue pour générer un signal représentatif de la complexité de l'ensemble de la séquence d'images représentée par le signal de données au niveau de la borne d'entrée de données, une borne d'entrée de commande et une borne de sortie de données connectée à une des bornes d'entrée respectives (1 à K) du multiplexeur (20) et conçue pour générer un signal codé à débit binaire constant fixé en fonction du signal au niveau de la borne d'entrée de commande ; et
    - un dispositif d'affectation de débit binaire (30), comportant une pluralité de paires de bornes d'entrée et de sortie associées, chaque paire étant associée avec un processeur de canaux respectif, la borne d'entrée de chaque paire étant connectée à la borne de sortie de complexité du processeur de canaux associé, et la borne de sortie de chaque paire étant connectée à la borne d'entrée de commande du processeur de canaux associé et conçue pour générer un signal de quota de débit binaire de façon à ce que à chaque processeur de canaux (10) soit affecté un débit binaire en relation avec la complexité représentée par le signal au niveau de la borne d'entrée associée et avec la complexité combinée représentée par les signaux aux niveau des bornes d'entrée de l'ensemble de la pluralité des paires, dans lequel :
    - ledit multiplexeur (20) est conçu pour générer un signal au niveau de sa borne de sortie (15) qui a un débit binaire prédéterminé constant,
    - chaque source de signaux (5) est conçue pour générer un signal de données qui est un signal vidéo comportant des données d'image de ladite séquence d'images comportant un certain nombre de trames, dans laquelle ladite durée donnée du groupe GOP est identique pour chaque processeur de la pluralité de processeurs de canaux,
    - chaque processeur de canaux (10) est conçu pour générer le signal représentatif de la complexité pendant le codage de la séquence d'images représentée par le signal de données au niveau de la borne d'entrée de données du processeur de canaux ; et
    - le dispositif d'affectation de débit binaire (30) est conçu pour générer un signal séparé de quota de débit binaire pour chaque processeur de canaux, les signaux séparés de quota de débit binaire étant valables pour la totalité de la durée du groupe GOP qui suit la durée donnée du groupe GOP, selon les signaux représentatifs de la complexité, de telle façon qu'à chaque processeur de canaux (10) soit affectée une proportion du débit binaire constant prédéterminé en fonction de la proportion de la complexité représentée par le signal au niveau de la borne d'entrée de chaque paire associée à la complexité combinée représentée par les signaux au niveau des bornes d'entrée de la pluralité des paires.

**2.** Système de multiplexage selon la revendication 1, dans lequel le dispositif d'affectation de débit binaire (30) est conçu pour générer des signaux de quota de débit binaire respectifs au niveau de la borne de sortie de chaque paire de bornes d'entrée et de sortie associée de façon à ce qu'un processeur de canaux (10) ayant un signal de complexité de niveau relativement important au niveau de sa borne d'entrée de données reçoive un signal de quota de débit binaire de niveau relativement plus élevé qu'un processeur de canaux (10) ayant un signal de complexité relativement moins important.

**3.** Système de multiplexage selon la revendication 2, dans lequel :

- le multiplexeur (20) est conçu pour générer un signal au niveau de sa borne de sortie ayant un débit binaire prédéterminé constant ;
- à chaque processeur de canaux (10) est affecté un débit binaire respectif prédéterminé minimal ; et
- le dispositif d'affectation de débit binaire (30) est conçu pour générer des signaux de quota de débit binaire respectifs au niveau de la borne de sortie de chaque paire associée de bornes d'entrée et de sortie, de façon à ce que à chaque processeur de canaux (10) soit affecté le débit binaire prédéterminé minimal prévu, et en outre une proportion de débit binaire restant, le débit binaire restant étant égal au débit binaire constant prédéterminé moins les débits binaires minimaux prédéterminés précédemment affectés, la proportion affectée en outre étant égale à la proportion de la complexité représentée par le signal au niveau de la borne d'entrée de la paire associée à la complexité combinée représentée par les signaux au niveau des bornes d'entrée de toutes les paires.

**4.** Système de multiplexage selon la revendication 2, dans lequel :

- le multiplexeur (20) est conçu pour générer un signal au niveau de sa borne de sortie (15) ayant un débit binaire constant ;
- à chaque processeur de canaux (10) est affecté un facteur de pondération respectif prédéterminé ; et
- le dispositif d'affectation de débit binaire (30) est conçu pour générer des signaux de quota de débit binaire respectifs au niveau de la borne de sortie de chaque paire de bornes d'entrée et de sortie associée de façon à ce qu'à chaque processeur de canaux soit affectée une proportion du débit binaire constant prédéterminé égale à la proportion de la complexité représentée par le signal au niveau de la borne d'entée de la paire associée à la complexité combinée représentée par les signaux au niveau des bornes d'entrée de la pluralité des paires, pondérée par le facteur de pondération prédéterminé affecté au processeur de canaux associé.

**5.** Système de multiplexage selon la revendication 2, dans lequel :

- le multiplexeur (20) est conçu pour générer un signal au niveau de sa borne de sortie (15) ayant un débit binaire prédéterminé constant ;
- à chaque processeur de canaux (10) est affecté un débit binaire respectif prédéterminé minimal et un facteur de pondération prédéterminé ; et
- le dispositif d'affectation de débit binaire (30) est conçu pour générer des signaux respectifs de quota de débit binaire au niveau de la borne de sortie de chaque paire de bornes d'entrée et de sortie associée de façon à ce qu'à ce que à chaque processeur de canaux soit affecté son débit binaire prédéterminé minimal et en outre une proportion du débit binaire restant, le débit binaire restant étant égal au débit binaire constant prédéterminé moins les débits binaires minimaux prédéterminés précédemment affectés, la proportion affectée en outre étant égale à la proportion de la complexité représentée par le signal au niveau de la borne d'entrée de la paire associée à la complexité combinée représentée par les signaux au niveau des bornes d'entrée de toutes les paires, pondérée par le facteur de pondération prédéterminé affecté au processeur de canaux associé.

**6.** Système de multiplexage selon la revendication 2, dans lequel :

- à chaque processeur de canaux (10) est affectée une limite respective d'affectation de débit binaire prédéterminée ; et

- le dispositif d'affectation de débit binaire (30), après la génération des signaux de quota de débit binaire respectifs qui affectent des débits binaires aux processeurs de canaux respectifs (10), est conçu pour comparer les affectations de débits binaires respectives aux limites respectives prédéterminées d'affectation de débit binaire, et si une affectation de débit binaire dépasse la limite d'affectation de débit binaire prédéterminée, pour générer un signal de quota de débit binaire représentant la limité prédéterminée d'affectation de débit binaire, au lieu de l'affectation précédemment générée de débit binaire pour le processeur de canaux associé.

**7.** Système de multiplexage selon la revendication 6, dans lequel la limite prédéterminée d'affectation de débit binaire est une affectation maximale de débit binaire.

**8.** Système de multiplexage selon la revendication 6, dans lequel la limite prédéterminée d'affectation de débit binaire est une affectation minimale de débit binaire.

**9.** Système de multiplexage selon la revendication 2, dans lequel :

- à chaque processeur de canaux (10) et affecté un incrément de limite respectif prédéterminé d'affectation de débit binaire ; et
- le dispositif d'affectation de débit binaire (30), après avoir généré les signaux respectifs de quota de débit binaire qui représentent les débits binaires affectés aux processeurs de canaux (10) associés, est conçu pour comparer les affectations respectives de débit binaire aux affectations de débit binaire correspondant représentées par les signaux respectifs de quota de débit binaire qui précèdent immédiatement pour déterminer les incréments d'affectation de débit binaire respectifs, et si un incrément d'affectation de débit binaire dépasse une limite d'incrément d'affectation de débit binaire prédéterminée affectée, pour générer un signal de quota de débit binaire qui représente l'affectation de débit binaire représentée par le signal de quota de débit binaire respectif immédiatement précédent modifiée par la limite d'incrément d'affectation de débit binaire prédéterminée, au lieu de l'affectation de débit binaire précédemment générée pour le processeur de canaux associé.

**10.** Système de multiplexage selon la revendication 9, dans lequel la limite d'incrément de débit binaire prédéterminée est un incrément maximal d'augmentation du débit binaire.

**11.** Système de multiplexage selon la revendication 9, dans lequel la limite d'incrément de débit binaire prédéterminée est un incrément maximal de diminution du débit binaire.

**12.** Système de multiplexage selon la revendication 2, dans lequel :

- chaque processeur de canaux (10) comprend une mémoire tampon de sortie (48) dont la capacité permet d'enregistrer temporairement les données à fournir au multiplexeur (20) pendant une certaine durée ; et
- le dispositif d'affectation de débit binaire (30), après la génération des signaux de quota de débit binaire respectifs qui représentent les débits binaires affectés aux processeurs de canaux (10), est conçu pour comparer les affectations de débit binaire aux affectations de débit binaire correspondantes représentées par les signaux de quota de débit binaire respectifs qui précèdent immédiatement, et si une affectation de débit binaire a diminué, pour déterminer si les données enregistrées temporairement dans la mémoire tapon de sortie du processeur de canaux du processeur de canaux associé seront fournies au multiplexeur (20) pendant la durée prédéterminée d'affectation diminuée de débit binaire, et sinon, pour générer un signal de quota de débit binaire qui représente une nouvelle affectation de débit binaire qui permettra aux données temporairement enregistrées dans la mémoire tampon de sortie du processeur de canaux associé d'être fournies au multiplexeur (20) pendant la durée prédéterminée, au lieu de l'affectation de débit binaire précédemment générée pour le processeur de canaux associé.

**13.** Système de multiplexage selon a revendication 1, dans lequel :

chacun des processeurs de la pluralité de processeurs de canaux (10) comporte :

- un codeur à débit binaire constant (14) ayant un trajet de données connecté entre la borne d'entrée de données (5) et la borne de sortie de données du processeur de canaux (10), et une borne d'entrée de quota (0) connectée à la borne d'entrée de commande (CONTROL) du processeur de canaux (10), pour générer le signal codé ; et

- un analyseur de complexité (16) connecté entre la borne d'entrée de données (5) et la borne de sortie de complexité (COMPLEXITY) du processeur de canaux (10), afin d'analyser la complexité du signal au niveau de la borne d'entrée de données (5), et de générer le signal représentatif de la complexité.

**14.** Système de multiplexage selon la revendication 13, dans lequel :

le codeur à débit binaire constant (14) comporte :

- un quantificateur variable (46) connecté au trajet de données du codeur à débit binaire constant (14) et comportant une borne d'entrée de commande ($Q_{MB}$) pour générer un signal quantifié ayant une valeur de pas de quantification défini en fonction du signal au niveau de la borne d'entrée de commande ($O_{MB}$) ; et
- un régulateur de débit binaire (49) connecté entre la borne de sortie de données ($T_{MB}$) du processeur de canaux (10) et la borne d'entrée de commande ($Q_{MB}$) du quantificateur variable (49), pour faire varier la valeur du pas de quantification en fonction du débit binaire du signal codé au niveau de la borne de sortie ( DATA OUT) du codeur à débit binaire constant (14) et du signal au niveau de la borne d'entrée de quota (Q) du codeur à débit binaire constant (14) ; et dans lequel :
- l'analyseur de complexité (16) comporte :
- des circuits de détermination de complexité (92 à 99) comportant des bornes d'entrée respectives connectées à la borne d'entrée de commande ($Q_{MB}$) du quantificateur variable (46) et à la borne de sortie du codeur à débit binaire constant (DATA OUT), afin de générer le signal représentatif de la complexité (Xpic) qui est fonction de la valeur moyenne du pas de quantification et du débit binaire du signal codé au niveau de la borne de sortie du codeur à débit binaire constant (DATA OUT).

**15.** Système de multiplexage selon la revendication 14, dans lequel les circuits de détermination de complexité (92 à 99) sont conçus pour générer le signal représentatif de la complexité (Xpic) qui est directement proportionnel à la valeur moyenne de pas de quantification ($Q_{MB}$) et au débit binaire ($T_{MB}$) du signal codé au niveau de la borne de sortie du codeur à débit binaire constant (DATA OUT).

**16.** Système de multiplexage selon la revendication 15, dans lequel les circuits de détermination de complexité (92 à 99) sont conçus pour générer le signal représentatif de la complexité (Xpic) qui est le produit de la valeur moyenne du pas de quantification ($Q_{MB}$) par le débit binaire ($T_{MB}$) du signal codé au niveau de la borne de sortie du codeur à débit binaire constant (DATA OUT).

**17.** Système de multiplexage selon la revendication 13, dans lequel codeur à débit binaire constant (14) comporte :

- un quantificateur variable (46) connecté dans le trajet de données du codeur à débit binaire constant (14) et ayant une borne d'entrée de commande ($Q_{MB}$) pour générer un signal quantifié dont la valeur du pas de quantification est définie en fonction du signal de valeur de pas de quantification au niveau de la borne d'entrée de commande ; et
- un régulateur de débit binaire (49) connecté entre la borne de sortie de données (DATA OUT) du processeur de canaux (10) et la borne d'entrée de commande ($Q_{MB}$) du quantificateur variable (46) et ayant une borne d'entrée de commande de débit binaire (Q) connectée à la borne de sortie de la paire associée de bornes d'entrée et de sortie du dispositif d'affectation de débit binaire (30), afin de générer le signal de valeur de pas de quantification au niveau de l'entrée de commande terminal ($Q_{MB}$) du quantificateur variable (46) pour commander la valeur du pas de quantification en fonction du débit binaire du signal codé au niveau de la borne de sortie du codeur à débit binaire constant (DATA OUT) et du signal au niveau de la borne d'entrée de commande de débit binaire (Q) ; et dans lequel :

l'analyseur de complexité (16) comporte :

- des circuits de détermination de complexité (92 à 99) ayant des bornes d'entrée respectives connectées à la bornes d'entrée de commande ($Q_{MB}$) du quantificateur variable (46) et à la borne de sortie du codeur à débit binaire constant (DATA OUT), afin de générer le signal représentatif de la complexité (Xpic) qui est fonction de la valeur moyenne du pas de quantification et du débit binaire du signal codé au niveau de la borne de sortie (DATA OUT) du codeur à débit binaire constant(14).

**18.** Système de multiplexage selon la revendication 17, dans lequel :

- le codeur à débit binaire constant (14) est conçu pour fonctionner selon le standard MPEG (Motion Picture Experts Group), à savoir diviser chaque image séquentielle du signal vidéo au niveau de sa borne d'entrée de données (5) en un nombre prédéterminé ($N_{MB}$) de macroblocs et coder séquentiellement chacun des nombres prédéterminés ($N_{MB}$) de macroblocs en nombres respectifs de bits ($T_{MB}$) au niveau de sa borne de sortie de données (DATA OUT) pour générer une séquence d'images codées ;

- le régulateur de débit binaire (49) est conçu pour générer des signaux respectifs de commande de valeur de pas de quantification ($Q_{MB}$) pour chacun des nombres prédéterminés ($N_{MB}$) de macroblocs ; et

- les circuits de détermination de complexité (92 à 99) comportent :

- un premier accumulateur (92, 93) connecté à la borne de sortie de données du codeur à débit binaire constant (DATA OUT), pour faire la somme des nombres respectifs de bits ($T_{MB}$) générés au niveau de la borne de sortie de données (DATA OUT) du codeur à débit binaire constant (14) pour chaque macrobloc codé, pour générer le nombre total de bits (Tpic) dans chacune des images séquentielles codées ;

- un deuxième accumulateur (96, 97) connecté au régulateur de débit binaire (49) pour faire la somme des signaux respectifs de valeur de pas de quantification ($Q_{MB}$) pour chaque macrobloc de chacune des images séquentielles ;

- un circuit de calcul de moyenne (98, 99) connecté au deuxième accumulateur (96, 97) pour calculer la valeur moyenne du pas de quantification pour le nombre prédéterminé ($N_{MB}$) de macroblocs dans chacune des images séquentielles, pour générer un signal de valeur moyenne du pas de quantification ($Q_{MB}$) pour chacune des images séquentielles ;

- un multiplicateur (94) connecté au premier accumulateur (92, 93) et au circuit de calcul de moyenne (98, 99), pour multiplier le nombre total de bits (T pic) par le signal de valeur moyenne du pas de quantification ($Q_{MB}$), pour générer un signal de complexité d'image (Xpic) pour chacune des images séquentielles ; et

- un troisième accumulateur (94, 95) pour faire la somme des signaux respectifs de complexité d'image pour chacune des images d'un groupe d'images, pour générer le signal représentatif de la complexité (XGOP).

FIG.1

FIG. 2

EP 0 803 163 B1

FIG. 3

FIG. 4

FIG. 5

25

FIG. 6

FIG. 7

FIG. 8

**EP 0 803 163 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5115309 A

**Non-patent literature cited in the description**

• Rate Control for VBR MPEG Video on Local Area Networks. *Proceedings of the SPIE - The International Society for Optical Engineering,* 08 February 1994, vol. 2188, 153-163